# EUROPÄISCHE PATENTSCHRIFT

(11) **EP 0 450 634 B1**
(45) Veröffentlichungstag und Bekanntmachung des Hinweises auf die Patenterteilung: **18.03.1998**
(21) Anmeldenummer: 91105373.4
(22) Anmeldetag: 05.04.1991
(51) Int. Cl.: B32B 25/04

(54) **Verbundmaterial, Verfahren zu seiner Herstellung und seine Verwendung**
Composite material, method for its manufacture and its use
Matériau composite, son procédé de fabrication et son utilisation

(30) Priorität: 06.04.1990 DE 4011235
(43) Veröffentlichungstag der Anmeldung: 09.10.1991
(73) Patentinhaber: STAHLGRUBER Otto Gruber GmbH & Co., 81675 München (DE)
(72) Erfinder:
(74) Vertreter: Beetz & Partner Patentanwälte

(56) Entgegenhaltungen:
- EP-A- 0 189 773
- DE-A- 2 830 344
- FR-A- 2 210 508
- GB-A- 2 007 997

## Beschreibung

Die Erfindung betrifft ein Verbundmaterial in Form eines Flachmaterials zur Beschichtung insbesondere verschleiß- und/oder korrosionsgefährdeter Substrate, ein Verfahren zu seiner Herstellung und ein Verfahren zur Herstellung von Verbundkörpern unter Verwendung des Verbundmaterials.

Zum Korrosionsschutz und zur Verschleißminderung von abrasiv hochbeanspruchten Maschinenteilen und Bauelementen sowie zum Schutz von Konstruktionselementen, Fundamenten u.dgl. sind Auskleidungen und Beschichtungen aus Gummimischungen seit langem bekannt, die als plattenförmige Elemente auf die Oberfläche der jeweiligen Substrate aufgebracht und durch geeignete Mittel dauerhaft daran befestigt werden. Die häufig zweckmäßigste Befestigungsart besteht dabei in einer großflächigen Verklebung. Zu diesem Zweck wird beispielsweise die Oberfläche eines zu schützenden metallischen Substrats gereinigt und aufgerauht, beispielsweise durch Sandstrahlen. Anschließend wird ein reaktiver Kleber, beispielsweise auf der Basis eines Chlorkautschuks mit reaktiven Gruppen, auf die vorbehandelte Oberfläche in einer oder mehreren Schichten aufgebracht. Darauf wird dann eine aus einem Kautschuk-Elastomer bestehende Platte aufgebracht, die an ihrer Verbindungsseite eine dünne Schicht aus einem vorvulkanisierten Kautschuk aufweisen kann. Derartige Beschichtungen haben den Vorteil einer festen und auch bei mechanischen Wechselbeanspruchungen dauerhaften Verbindung zwischen der verschleißfreien Kautschuk- bzw. Gummischicht und dem Substrat, insbesondere Stahl.

Aufgrund ihrer vielseitig einstellbaren Eigenschaften wurden bereits seit längerem Polyurethane als relativ hochverschleißfeste und korrosionsfeste Beschichtungs- und Auskleidungsmaterialien in Form von Platten, Folien oder anderen Formkörpern eingesetzt. Obgleich dieses Material, dessen Härte und Elastizität über den Vernetzungsgrad sowie gegebenenfalls einen Weichmacherzusatz eingestellt werden können, die Anforderungen hinsichtlich Verschleiß- und Korrosionsschutz erfüllt, ergeben sich bei einem direkten Aufbringen auf metallische Substrate insofern Probleme, als eine ausreichend feste und dauerhafte Klebeverbindung zwischen metallischen Substraten und einer Polyurethanschicht nicht erzielt werden kann. Darüber hinaus ist es zur Erzielung einer festen Verbindung des Polyurethans mit einem metallischen Substrat unerläßlich, die Polyurethanschicht vor dem Aufbringen des Bindemittels gleichmäßig aufzurauhen, was bei großflächigen Flachmaterialien erheblich schwieriger zu bewerkstelligen ist als bei herkömmlichen Kautschukplatten.

Aus DE-A-28 30 344 sind Verbundkörper aus einem metallischen Substrat und einer daran festhaftenden Beschichtung bekannt, die aus einer Unterschicht aus mehreren abwechselnd aus Hartgummi und Weichgummi bestehenden Schichten und einer Deckschicht aus einem Thermoplasten oder Duroplasten besteht. Die mit dem Substrat zu verbindende erste Schicht der Unterschicht kann dabei aus einem selbstvulkanisierenden Chloropren-Kautschuk bestehen. Der mehrschichtige Aufbau dient dazu, auch bei thermischer wechselbeanspruchung eine Ablösung des Verbundmaterials vom Substrat bzw. Rißbildung aufgrund unterschiedlicher thermischer Ausdehnungskoeffizienten zu verhindern. Als duroplastische Materialien für die Deckschicht sind u.a. Polyurethane genannt. Die Herstellung der Verbundkörper erfolgt nach diesem Stand der Technik so, daß auf die blanke Metalloberfläche die einzelnen Schichten mit geeigneten Bindemitteln nacheinander aufgebracht werden, worauf gegebenenfalls vulkanisiert wird. Die einzelnen Schichten werden als vorgefertigte Platten, Folien oder Bahnen eingesetzt. Eine zufriedenstellende Verbindung zwischen einem Chloropren-Kautschuk als Unterschicht und einer als Flachmaterial aufgebrachten Deckschicht aus einem Polyurethan läßt sich allerdings durch entsprechendes Verkleben, auch nach vorherigem Aufrauhen der Unterschicht, nicht erreichen. Eine besondere Schwierigkeit liegt ferner darin, daß die abschließende Vulkanisation in einem Autoklaven durchgeführt werden muß, der in seiner Größe der Größe des herzustellenden Verbundkörpers angepaßt sein muß, was bei großen Objekten einen erheblichen Investitions- und Betriebsaufwand erfordert.

Aus DE-A-35 14 864 ist ein Verfahren zur Herstellung von Verbundartikeln aus reaktivem Kautschuk und gießbaren Polyurethanen bekannt, bei dem als Haftvermittler bestimmte aromatische Nitrosoverbindungen oder aromatische Sulfensäurechloride verwendet werden, die gegenüber Doppelbindungen des Kautschuks und Isocyanatgruppen des Polyurethansystems reaktiv sind. Dabei wird zunächst die unvulkanisierte oder anvulkanisierte Kautschukmischung mit dem Haftvermittler vorbehandelt, worauf das Polyurethansystem aufgegossen wird. Eine zufriedenstellende Haftung zwischen Kautschuk- und Polyurethanschicht kann nach diesem Stand der Technik allerdings nur realisiert werden, wenn der Haftvermittler gelöst in einem Polyurethansystem, gegebenenfalls noch unter Einsatz eines Lösungsmittels wie Methylenchlorid als Lösungsvermittler, auf die Kautschukschicht aufgebracht wird. Ein weiterer Nachteil besteht darin, daß die Gummiplatte zuvor aufgerauht, mit einem Lösungsmittel wie Benzin gereinigt und danach abgelüftet werden muß, bevor der Haftvermittler aufgetragen werden kann.

Ferner ist aus der FR-A-2 210 508 ein gattungsgemäßes Verbundmaterial aus Kautschuk und Urethan für z.B. Verbundreifen, Walzenbeschichtungen oder Fußböden bekannt, das durch Verkleben einer gehärteten Kautschukschicht mit einem flüssig aufgetragenen Urethan-Prepolymer unter Verwendung einer Polyisocyanatlösung als Bindemittel hergestellt wird. Zu diesem Zweck wird die Oberfläche der zuvor gehärteten Kautschukschicht aufgerauht und nach Reinigung von anhaftenden Partikeln mit dem in einem flüchtigen Lösungsmittel gelösten Isocyanat überzogen. Nach Verdampfen des Lösungsmittels wird das flüssige mit einem Härtungsmittel versehene Urethan-Prepolymer aufgebracht und bei erhöhter Temperatur von 80 bis 120 °C über bis zu 6 Stunden ausgehärtet.

Der Erfindung liegt entsprechend die Aufgabe zugrunde, ein Verbundmaterial auf der Basis eines mit Polyurethan beschichteten Chloropren-Kautschuks, durch Beschichten von Substraten mit diesem Verbundmaterial erhältliche Verbundkörper und Verfahren zu ihrer Herstellung anzugeben, mit denen in technisch einfacher und zugleich wirtschaftlicher Weise hochfeste Verbindungen zwischen dem Chloropren-Kautschuk und dem Polyurethan wie auch zwischen dem Substrat und dem Chloropren-Kautschuk erzielt werden können, wobei die Verbundmaterialien ohne Verwendung eines Autoklaven in einfacher Weise vor Ort auf Substrate aufzubringen sein sollen.

Die Aufgabe wird anspruchsgemäß gelöst. Die abhängigen Ansprüche betreffen vorteilhafte Ausführungsformen der Erfindungskonzeption.

Das erfindungsgemäße Verbundmaterial, das zur Beschichtung insbesondere verschleiß- und/oder korrosionsgefährdeter Substrate vorgesehen ist und in Form eines Flachmaterials, besonders in Form von Platten, vorliegt, weist eine Unterschicht aus einem Chloropren-Kautschuk, deren Unterseite zum Aufbringen auf das Substrat vorgesehen ist, und eine über eine Bindemittelschicht mit der Oberseite der Unterschicht verbundene Deckschicht aus einem Polyurethan auf, wie dies gattungsgemäß aus der oben erläuterten Druckschrift DE-A-28 30 344 bekannt ist. Es ist erfindungsgemäß dadurch gekennzeichnet, daß die Unterschicht aus einem vorvulkanisierten, kaltvulkanisierbaren Chloropren-Kautschuk besteht, der noch reaktive Vernetzungszentren aufweist und gegebenenfalls einen mineralischen Füllstoff enthält, und die Deckschicht aus einem Polyurethan-Elastomer, insbesondere auf der Basis eines Polyesterpolyols, bestehen, das gegebenenfalls einen Weichmacher enthält. Das Polyurethan-Elastomer wird dabei erfindungsgemäß in fließfähiger Form auf die mit einem lösungsmittelfreien reaktiven Kleber, insbesondere auf der Basis eines Polyurethan-Elastomers, beschichtete Unterschicht aufgebracht und mit ihr chemisch vernetzt.

Dabei stellt es einen besonderen verfahrenstechnischen wie auch wirtschaftlichen Vorteil dar, daß das Aufbringen der Deckschicht nach dieser Verfahrensweise kein Aufrauhen der Unterschicht erfordert.

Beim erfindungsgemäßen Verfahren wird entsprechend die Unterschicht mit einem reaktiven Bindemittel versehen, worauf auf die resultierende Bindemittelschicht die Deckschicht aus dem Polyurethan durch Aufbringen eines gießbaren Polyurethan-Elastomers, insbesondere eines Präpolymers, aufgebracht wird, die abschließend ausgehärtet wird.

Die Härte bzw. die Elastizitätseigenschaften des Polyurethans lassen sich sowohl durch Verwendung von Weichmachern als auch durch Wahl des Vernetzungsgrades in weiten Bereichen einstellen.

Als Bindemittel zur Verbindung der Chloropren-Kautschuk-Unterschicht und der Deckschicht aus dem Polyurethan-Elastomer wird ein lösungsmittelfreier bzw. lösungsmittelfrei gemachter reaktiver Polyurethan-Kleber verwendet, der gegenüber dem gießbaren Polyurethansystem, das noch freie, reaktive Isocyanatgruppen und/oder Hydroxylgruppen aufweist, und dem Chloropren- Kautschuk reaktiv ist. Derartige Kleber sind dem Fachmann an sich geläufig.

Das gießbare Polyurethansystem enthält als Polyolkomponente vorteilhaft ein Polyesterpolyol, jedoch sind auch andere Polyole im Rahmen der Erfindung geeignet. Als Polyisocyanatkomponente des Polyurethansystems eignen sich übliche Polyisocyanate wie z.B. TDI. Das Polyurethansystem wird vorteilhaft in Form eines entsprechenden Präpolymers eingesetzt.

Beim Aufbau des erfindungsgemäßen Verbundmaterials wird prinzipiell so verfahren, daß zunächst eine Unterschicht aus vorvulkanisiertem, kaltvulkanisierbarem Chloropren-Kautschuk vorgelegt wird, auf die nach Behandlung mit dem Kleber unmittelbar das Polyurethansystem in der angestrebten Schichtdicke aufgebracht wird, vorteilhaft durch Aufgießen oder Aufschleudern. Durch das Aufbringen des reaktiven Polyurethan-Klebers, der im Falle eines Lösungsmittelgehalts durch Ablüften lösungsmittelfrei gemacht wird, resultiert eine chemisch modifizierte Oberfläche des Chloropren-Kautschuks, die gewissermaßen Polyurethan-modifiziert ist und daher optimal mit dem aufgegossenen Polyurethansystem vernetzbar ist.

Zur Beschichtung wird der Chloropren-Kautschuk der Unterschicht vorzugsweise auf eine gegenüber Raumtemperatur erhöhte Temperatur im Bereich von 80 bis 150 °C vorgeheizt, wobei das Polyurethansystem vorteilhaft ebenfalls in vorgeheizter Form aufgebracht wird.

Nach dem Aufbringen der Deckschicht schließt sich erforderlichenfalls ein thermischer Nachbehandlungsschritt bei erhöhter Temperatur im Bereich von 80 bis 150 °C an, insbesondere, um das Polyurethan weiter bzw. vollständig zu vernetzen.

Die erfindungsgemäß eröffnete Möglichkeit, beliebige Substrate mit dem vorgefertigten Verbundmaterial zu beschichten, ohne daß hierbei ein Autoklavierschritt erforderlich ist, stellt einen großen anwendungstechnischen Vorteil gegenüber der herkömmlichen Verfahrensweise dar, bei der das Substrat zunächst mit einer Kautschukschicht und anschließend, über eine Bindemittelschicht, mit einer Elastomerschicht in Form eines Flachmaterials belegt wird, deren feste Verbindung nur in einem Autoklaven gewährleistet werden kann.

Die Festigkeit der Bindung zwischen dem Chloropren-Kautschuk und dem Polyurethan ist erfindungsgemäß, und zwar ohne Aufrauhen der Unterschicht vor dem Auftrag des Polyurethans, so hoch, daß beim Zerreißversuch Strukturbruch innerhalb der Polyurethanschicht auftritt, also der Bruch nicht in der Verklebungsebene zwischen Chloropren-Kautschuk und Polyurethan erfolgt.

Im Rahmen der Erfindung kann die Verbindung der Unterschicht aus dem Chloropren-Kautschuk mit einem Substrat, besonders einem metallischen Substrat, mit einem reaktiven Kleber vorgenommen werden, vorzugsweise mit einem reaktiven Chloropren-Kleber, der optimal auf die Chloropren-Kautschukschicht eingestellt ist, wobei Kaltvulkanisation möglich ist. Der Chloropren-Kleber hat den Vorteil, daß rasch eine hohe Anfangsfestigkeit erzielt wird, so daß auch auf stark geneigten oder über hängenden Substratflächen eine rasche Fixierung des Verbundmaterials möglich ist. Erforderlichenfalls wird das Substrat zuvor mit einem üblichen Primer behandelt.

Das erfindungsgemäße Verbundmaterial bzw. entsprechende Verbundkörper sind vorteilhaft so dimensioniert, daß die Unterschicht eine Dicke im Bereich etwa 0,7 bis etwa 5,0 mm und vorzugsweise von etwa 3 mm aufweist. Entsprechend besitzt die Deckschicht erfindungsgemäß vorteilhaft eine Dicke im Bereich von etwa 2 bis etwa 30 mm und vorzugsweise von etwa 15 mm.

Die erfindungsgemäßen Verbundmaterialien sind zur Beschichtung bzw. Auskleidung verschiedenster Substrate, insbesondere sehr großflächiger Substrate, geeignet, da keine Autoklavierung erforderlich ist. Sie eignen sich insbesondere zur Beschichtung von Substraten aus Metall, besonders Stahl, aber auch für Substrate aus anderen Materialien wie Kunststoff, Holz, Zement oder Beton. Dementsprechend sind die erfindungsgemäßen Verbundmaterialien besonders vorteilhaft sowohl in der Verfahrenstechnik und im chemischen Apparatebau als auch zum Schutz von Konstruktionselementen wie Fundamenten u.dgl. geeignet. Dabei stellt es auch einen besonderen Vorteil dar, daß das erfindungsgemäße Verbundmaterial auch auf senkrechten oder überhängenden Flächen, insbesondere Behälterinnenwänden, in einfacher Weise aufgebracht werden kann. Durch das Entfallen des Aufrauhens der Klebefläche lassen sich Beschichtungsarbeiten entsprechend in gegenüber dem Stand der Technik erheblich kürzeren Zeiten durchführen. Aufgrund der in weiten Bereichen wählbaren Dicke der Unterschicht und der Deckschicht lassen sich Festigkeit, Dämpfungseigenschaften und Vibrationsbeständigkeit der Verbundmaterialien optimal an den jeweiligen Anwendungsfall anpassen. Die erfindungsgemäßen Verbundmaterialien besitzen entsprechend auch bei, abgesehen von der dickenmäßig nicht relevanten Bindemittelschicht, zweischichtigem Aufbau auch bei thermischer Wechselbelastung ausgezeichnetes Haftungsvermögen sowohl an der Grenze Substrat/Unterschicht als auch zwischen Unterschicht und Deckschicht.

Zur Auskleidung beispielsweise eines Metallbehälters kann entsprechend etwa so verfahren werden, daß auf die Metalloberfläche ein flüssiger Haftvermittler (Primer) aufgetragen wird, nach dessen Verfestigung ein Kleber, insbesondere auf der Basis eines Chloropren-Kautschuks aufgetragen wird. Der gleiche Kleber wird auch auf die Unterseite der Unterschicht aufgetragen, die hierzu nicht aufgerauht werden muß. Nach Auflegen der so vorbereiteten Verbundplatte auf die Metalloberfläche erfolgt in relativ kurzen Reaktionszeiten eine Verfestigung durch Kaltvulkanisation, bei der schnell eine ausreichende Anfangsfestigkeit der Verbindung erzielt wird, wodurch eine rasche Fixierung entsprechender Platten in ihrer vorgesehenen Lage möglich ist, ohne daß seitliche Verrutschungen vorkommen. Eine Nachvulkanisation kann durch Nachheizen erfolgen.

Nach einer vorteilhaften Weiterbildung weist das erfindungsgemäße Verbundmaterial eine Unterschicht aus drei übereinanderliegenden Lagen auf, wobei die zum Aufbringen auf das Substrat vorgesehene bzw. im Fall von Verbundkörpern mit dem Substrat festhaftend verbundene unterste Lage sowie die oberste Lage aus vorvulkanisiertem, kaltvulkanisierbarem bzw. im Fall der Verbundkörper entsprechend vulkanisiertem Chloropren-Kautschuk und die mittlere Lage aus vulkanisiertem Chloropren-Kautschuk bestehen.

Auf der Deckschicht kann ferner nach einer weiteren vorteilhaften Ausführungsform eine zusätzliche Schicht aus Chloropren-Kautschuk vorgesehen sein, die aus einer oder mehreren Lagen bestehen kann. Vorteilhaft besteht diese zusätzliche Schicht aus drei Lagen und weist gleichen oder vergleichbaren Aufbau auf wie die oben erläuterte dreilagige Unterschicht. Die entsprechenden Lagen sind jeweils mit einem reaktiven Kleber, insbesondere auf der Basis eines Polyurethan-Elastomers und/oder eines Polychloropren-Elastomers, miteinander verklebt. Auf der zusätzlichen Schicht können ferner, um einen mehrschichtigen Verbundaufbau zu erzielen, wiederum eine oder mehrere Lagen des erfindungsgemäßen Verbundmaterials vorgesehen sein, wobei für die entsprechenden Verklebungen das oben Gesagte gilt.

Gemäß anderen Weiterbildungen des erfindungsgemäßen Verfahrens können eine oder mehrere der nachstehend aufgelisteten Maßnahmen durchgeführt werden:
- Verwendung eines gießbaren Polyurethan-Elastomers auf der Basis eines Polyesterpolyols für die Deckschicht;
- Verwendung eines gießbaren Polyurethan-Elastomers für die Deckschicht, das einen Weichmacher enthält;
- Herstellung bzw. Verwendung eines Flachmaterials aus dem Chloropren-Kautschuk als Unterschicht in einer Dicke von etwa 0,7 bis 5,0 mm und vorzugsweise etwa 3 mm;
- Herstellung der Deckschicht aus dem Polyurethan als Deckschicht in einer Dicke von etwa 2 bis 30 mm und vorzugsweise etwa 15 mm;
- Aufbringen einer zusätzlichen ein- oder mehrlagigen Schicht aus Chloropren-Kautschuk, die vorzugsweise aus einem vorvulkanisierten, kaltvulkanisierbaren Chloropren-Kautschuk besteht, auf die Deckschicht;
- Aufbringen einer zusätzlichen Schicht aus drei Lagen, wovon die beiden äußeren Lagen aus einem vorvulkanisierten, kaltvulkanisierbaren Chloropren-Kautschuk und die mittlere Lage aus einem vulkanisierten Chloropren-Kautschuk bestehen, durch Verkleben einer der äußeren Lagen mit einem reaktiven Kleber auf der Basis eines Polyurethan-Elastomers mit der Deckschicht;
- Aufbringen eines Verbundmaterials wie oben definiert auf die zusätzliche Schicht;
- Aufbringen eines vorgefertigten Verbundmaterials wie oben definiert, insbesondere in Form von Platten, auf ein Substrat aus Metall, insbesondere Stahl, Kunststoff, Holz, Zement oder Beton, und insbesondere auf die Innenoberfläche von Behältern, insbesondere durch Verkleben, und vorzugsweise mit einem kaltvulkanisierenden Chloropren-Kautschuk-Kleber;
- Aufbringen des gießbaren Polyurethan-Elastomers der Deckschicht durch Gießen oder Schleudern;
- Aufbringen des gießbaren Polyurethan-Elastomers der Deckschicht bei einer Temperatur oberhalb seines Schmelzpunktes;
- Nachvernetzen des Polyurethans der Deckschicht bei gegenüber Raumtemperatur erhöhter Temperatur, vorzugsweise bei etwa 130 °C;
- Aufbringen der Deckschicht auf die Unterschicht ohne vorheriges Aufrauhen der Unterschicht;
- Vorbehandlung des Substrats vor dem Aufbringen des Verbundmaterials mit einem Primer;
- Verwendung eines kaltvernetzenden Polyurethan-Klebers als Bindemittel der Bindemittelschicht.

Die Erfindung wird im folgenden anhand von Ausführungsbeispielen und Vergleichsbeispielen unter Bezug auf die Zeichnungen näher erläutert; es zeigen:
- Fig. 1:: Eine schematische perspektivische Darstellung eines erfindungsgemäßen Verbundmaterials
und
- Fig. 2:: eine Querschnittsdarstellung eines erfindungsgemäßen Verbundkörpers mit einer zusätzlichen, auf der Deckschicht vorgesehenen Mehrschichtstruktur.

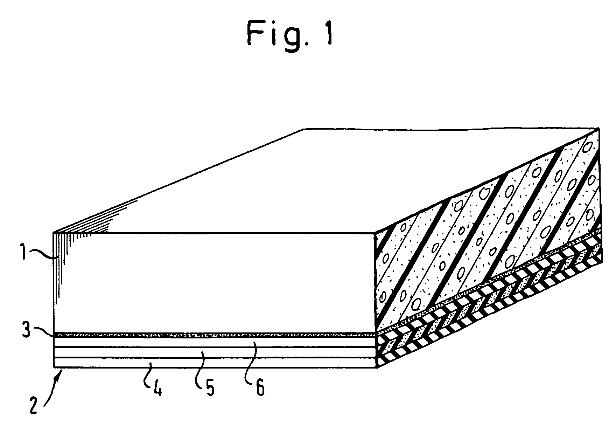

Das in Fig. 1 dargestellte erfindungsgemäße Verbundmaterial besteht aus der Unterschicht 2 aus Chloropren-Kautschuk, die auch nach dem vollständigen Schichtaufbau noch reaktiv und kalt vulkanisierbar ist, der Bindemittelschicht 3 auf der Basis eines Polyurethan-Elastomers und der Deckschicht 1 aus einem Polyurethan-Elastomer, die über die Bindemittelschicht 3 festhaftend mit der Unterschicht 2 verbunden ist. Die Unterschicht 2 besteht für die meisten praktischen Anwendungen aus einer einfachen Chloropren-Kautschuk-Schicht, die kalt vulkanisierbar ist und durch einen der oben genannten Kleber auf eine entsprechend vorbehandelte Substratoberfläche, insbesondere eine Metalloberfläche, festhaftend aufgebracht werden kann. Im dargestellten Fall der Fig. 1 besteht die Unterschicht 2 aus drei übereinanderliegenden Lagen 4, 5 und 6, wobei die zum Aufbringen auf ein Substrat vorgesehene unterste Lage 4 sowie die an die Bindemittelschicht 3 bzw. die Deckschicht 1 angrenzende oberste Lage 6 aus vorvulkanisiertem und kaltvulkanisierbarem Chloropren-Kautschuk, der entsprechend noch reaktive Vernetzungszentren aufweist, und die mittlere Lage 5 aus einem teilweise oder vorzugsweise vollständig vulkanisierten Chloropren-Kautschuk bestehen.

Dieses Verbundmaterial kann in der beschriebenen Weise auf ein Substrat 7 durch Kaltvulkanisation bzw. Kaltvernetzung mit einem lösungsmittelfreien reaktiven Kleber auf der Basis eines Polyurethan-Elastomers bzw. eines Chloropren-Kautschuk-Elastomers festhaftend aufgebracht werden.

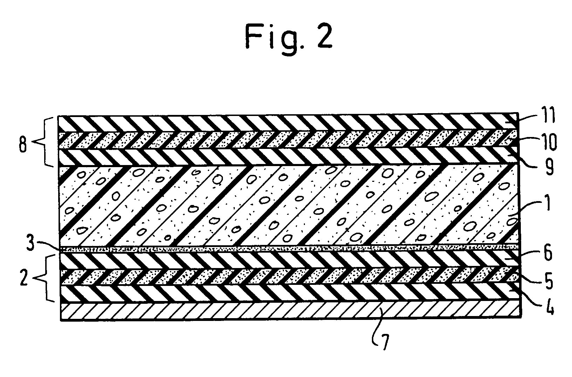

Ein derartiger Verbundkörper ist in Fig. 2 dargestellt. Er besteht entsprechend aus dem in Fig. 1 dargestellten Verbundmaterial, d.h. aus der Deckschicht 1 aus dem elastomeren Polyurethan; der Bindemittelschicht 3 und der an das Substrat angrenzenden und mit ihm verklebten Unterschicht 2, die wiederum den beschriebenen Aufbau aus einer untersten Lage 4, einer mittleren Lage 5 und einer obersten Lage 6 aufweist.

Auf der Deckschicht 1 ist ferner eine zusätzliche Schicht 8 vorgesehen, die ihrerseits aus drei Lagen 9, 10, 11 besteht, bei der wiederum die beiden äußeren Lagen 9, 11 aus einem vorvulkanisierten und kaltvulkanisierbaren Chloropren-Kautschuk und die mittlere Lage 10 aus einem vollständig vulkanisierten Chloropren-Kautschuk bestehen. Die äußere Lage 9 ist mittels eines reaktiven Klebers der oben definierten Art mit der Deckschicht 1 verklebt.

Auf diese Weise lassen sich vielschichtige Verbundmaterialien erzielen, die gegenüber Verbundmaterialien mit Dreischichtaufbau mit entsprechend dicker Deckschicht 1 den Vorteil größerer Elastizität aufweisen. Ferner lassen sich auf diese Weise Verbundmaterialien sehr großer Dicke herstellen, die besondere Strukturstabilität besitzen, bei denen entsprechend auch bei extremer thermischer und mechanischer Beanspruchung, insbesondere auch Scherbeanspruchung, keine Schichtablösung an den entsprechenden Grenzflächen auftritt.

Das in Fig. 1 dargestellte Verbundmaterial und der Verbundkörper von Fig. 2 können nach dem oben beschriebenen Verfahren hergestellt werden, d.h. durch Aufbringen eines lösungsmittelfreien reaktiven Klebers auf der Basis eines Polyurethan-Elastomers auf ein Flachmaterial aus einem vorvulkanisierten und kaltvulkanisierbaren Chloropren-Kautschuk als Unterschicht, Aufbringen einer Schicht eines gießbaren Polyurethan-Elastomers auf die mit dem entsprechenden Bindemittel versehene Unterschicht und Aushärten bzw. Nachvernetzen des Polyurethan-Elastomers bzw. Polyurethan-Elastomer-Präpolymers unter Erhalt einer Deckschicht, worauf gegebenenfalls das erhaltene Verbundmaterial auf ein Substrat 7 aufgebracht wird.

Die Erfindung stellt eine Kombination der an sich bekannten Beschichtung von Substraten mit kaltvulkanisierbaren Elastomeren mit einer Polyurethan-Deckschicht dar, die aufgrund der Erzeugung aus einem flüssigen Polyurethan-Elastomersystem nach der erfindungsgemäßen Verfahrensweise eine extrem gute Haftung auch ohne vorheriges Aufrauhen der Unterschicht aufweist, wobei das Verbundmaterial seinerseits auch ohne Aufrauhen durch Verkleben auf vorbereitete Substratoberflächen, besonders Metalloberflächen, in einfacher Weise und bei rascher Fixierung aufgebracht werden kann.

Durch den Wegfall von Autoklavierschritten wird nicht nur eine wesentlich höhere Wirtschaftlichkeit des erfindungsgemäßen Verfahrens bzw. der erfindungsgemäßen Verbundmaterialien und Verbundkörper erzielt, sondern zugleich auch eine verfahrensmäßige Beschleunigung gegenüber dem Stand der Technik bei der Beschichtung von Substratoberflächen erreicht.

### Vergleichsbeispiel 1

Eine Polyurethanplatte auf der Basis eines Polyesterpolyols wurde auf eine in herkömmlicher Weise präparierte Stahloberfläche geklebt, wobei die Polyurethanplatte nicht aufgerauht wurde. Dabei wurde ein ein Chloropren-Kleber verwendet. Es resultierte eine Trennfestigkeit < 1 N/mm.

### Vergleichsbeispiel 2

Es wurde wie in Vergleichsbeispiel 1 verfahren, wobei jedoch die Polyurethanplatte vor dem Verkleben mechanisch aufgerauht wurde. Die mechanische Aufrauhung von Polyurethanplatten ist gegenüber der Aufrauhung von Kautschuk- bzw. Gummiplatten noch aufwendiger, da Polyurethanplatten beim Aufrauhen zum Schmieren neigen.

Die bei gleicher Verfahrensweise resultierende Trennfestigkeit betrug etwa 3 N/mm.

### Erfindungsgemäßes Beispiel

Ein Polyurethan-Elastomer-Präpolymer auf der gleichen Basis wie in den Vergleichsbeispielen 1 und 2 wurde heiß bei einer Temperatur oberhalb des Schmelzpunkts auf eine reaktive Kleberschicht auf der Basis eines reaktiven Polyurethan-Kautschuks auf eine Unterschicht aus vorvulkanisiertem und kaltvulkanisierbarem Chloropren-Kautschuk gegossen, worauf das erhaltene Verbundmaterial nach Temperung in gleicher Weise wie bei den Vergleichsbeispielen 1 und 2 auf Stahl verklebt wurde.

Die resultierende Trennfestigkeit betrug etwa 20 N/mm.

Zerreißversuche ergaben, daß die erfindungsgemäßen Verbundkörper weder an der Grenzfläche zwischen Metall und Chloropren-Kautschuk noch an der Grenzfläche zwischen Chloropren-Kautschuk und Polyurethan-Elastomer zerreißen, sondern Strukturbruch innerhalb des Polyurethan-Elastomers auftritt. Dies erweist die hervorragende Bindungsfestigkeit an den entsprechenden Grenzschichten, wobei die Erhöhung der Trennfestigkeit gegenüber den Vergleichsbeispielen 1 und 2 mit dem Faktor von etwa 20 bzw. etwa 7 durchaus unerwartet hoch ist.

Erfindungsgemäß wird als Unterschicht 2 generell ein vorvulkanisierter und noch kaltvulkanisierbarer Chloropren-Kautschuk eingesetzt, d.h. ein Chloropren-Kautschuk, der noch reaktive Vernetzungszentren aufweist. Durch die Zusammenlaminierung mit der Deckschicht über die Bindemittelschicht, die üblicherweise bei gegenüber Raumtemperatur erhöhter Temperatur vorgenommen wird, wird eine Weitervulkanisation der Unterschicht hervorgerufen. Gleichwohl besitzt die Unterschicht 2 aus dem Chloropren-Kautschuk auch beim fertigen erfindungsgemäßen Verbundmaterial noch immer ausreichende Kaltvulkanisierbarkeit, um mit einem geeigneten Kleber bzw. Bindemittel auf Substratoberflächen, insbesondere Metalloberflächen, reaktiv aufgeklebt werden zu können.

## Patentansprüche

1. Verbundmaterial in Form eines Flachmaterials, besonders in Form von Platten, zur Beschichtung insbesondere verschleiß- und/oder korrosionsgefährdeter Substrate (7), das eine Unterschicht (2) aus einem Chloropren-Kautschuk, deren Unterseite zum Aufbringen auf das Substrat (7) vorgesehen ist, und eine über eine Bindemittelschicht (3) mit der Oberseite der Unterschicht (2) verbundene Deckschicht (1) aus einem elastomeren Polyurethan, die durch Aufbringen eines gießbaren Polyurethansystems auf die mit dem Bindemittel (3) beschichtete Unterschicht (2) hergestellt ist, aufweist,
dadurch gekennzeichnet, daß
- die Unterschicht (2) aus einem vorvulkanisierten, kaltvulkanisierbaren Chloropren-Kautschuk besteht, der gegebenenfalls einen mineralischen Füllstoff enthält, und
- das Bindemittel aus einem lösungsmittelfreien reaktiven Kleber, insbesondere auf der Basis eines Polyurethan-Elastomers, besteht.

2. Verbundmaterial in Form eines Flachmaterials zur Beschichtung insbesondere verschleiß- und/oder korrosionsgefährdeter Substrate, das eine Unterschicht (2) aus einem Chloropren-Kautschuk, deren Unterseite zum Aufbringen auf das Substrat (7) vorgesehen ist, und eine über eine Bindemittelschicht (3) mit der Oberseite der Unterschicht (2) verbundene Deckschicht (1) aus einem Polyurethan, die durch Aufbringen eines gießbaren Polyurethanelastomers auf die mit dem Bindemittel (3) beschichtete Unterschicht (2) und Aushärten hergestellt ist, aufweist, erhältlich durch
- Aufbringen eines lösungsmittelfreien reaktiven Klebers, insbesondere auf der Basis eines Polyurethan-Elastomers, als Bindemittel auf ein Flachmaterial aus einem vorvulkanisierten, kaltvulkanisierbaren Chloropren-Kautschuk, der gegebenenfalls einen mineralischen Füllstoff enthält, als Unterschicht (2),
- Aufbringen des gießbaren Polyurethan-Elastomers, das gegebenenfalls einen Weichmacher enthält, insbesondere auf der Basis eines Polyesterpolyols, auf die mit dem Bindemittel versehene Unterschicht (2) und
- Aushärten des Polyurethan-Elastomers unter Erhalt der Deckschicht (1).

3. Verbundmaterial nach Anspruch 1 oder 2, dadurch gekennzeichnet, daß die Unterschicht (2) eine Dicke im Bereich von etwa 0,7 bis 5,0 mm und vorzugsweise von etwa 3 mm und/oder die Deckschicht (1) eine Dicke im Bereich von etwa 2 bis 30 mm und vorzugsweise von etwa 15 mm aufweisen.

4. Verbundmaterial nach einem oder mehreren der Ansprüche 1 bis 3, dadurch gekennzeichnet, daß die Unterschicht (2) aus drei übereinanderliegenden Lagen (4, 5, 6) besteht, wobei die zum Aufbringen auf das Substrat (7) vorgesehene bzw. mit dem Substrat (7) festhaftend verbundene unterste Lage (4) sowie die oberste Lage (6) aus vorvulkanisiertem, kaltvulkanisierbarem Chloropren-Kautschuk und die mittlere Lage (5) aus vulkanisiertem Chloropren-Kautschuk bestehen.

5. Verbundmaterial nach einem oder mehreren der Ansprüche 1 bis 4, dadurch gekennzeichnet, daß auf der Deckschicht (1) eine zusätzliche ein- oder mehrlagige Schicht (8) aus Chloropren-Kautschuk vorgesehen ist, die vorzugsweise aus einem vorvulkanisierten, kaltvulkanisierbaren Chloropren-Kautschuk besteht und mit einem reaktiven Kleber auf der Basis eines Polyurethan-Elastomers mit der Deckschicht (1) verklebt ist.

6. Verbundmaterial nach Anspruch 5, dadurch gekennzeichnet, daß die zusätzliche Schicht (8) aus drei Lagen (9, 10, 11) besteht, wobei die beiden äußeren Lagen (9, 11) aus einem vorvulkanisierten, kaltvulkanisierbaren Chloropren-Kautschuk und die mittlere Lage (10) aus einem vulkanisierten Chloropren-Kautschuk bestehen und eine der äußeren Lagen (9) mit einem reaktiven Kleber auf der Basis eines Polyurethan-Elastomers mit der Deckschicht (1) verklebt ist.

7. Verbundmaterial nach Anspruch 5 oder 6, dadurch gekennzeichnet, daß auf der zusätzlichen Schicht (8) ein Verbundmaterial gemäß einem der Ansprüche 1 bis 6 vorgesehen ist.

8. Verfahren zur Herstellung der Verbundmaterialien nach den Ansprüchen 1 bis 7 durch Aufbringen einer Schicht eines Bindemittels auf ein Flachmaterial aus einem Chloropren-Kautschuk als Unterschicht (2), Aufbringen einer Schicht eines gießbaren Polyurethan-Elastomers auf das mit dem Bindemittel versehene Flachmaterial aus dem Chloropren-Kautschuk und Aushärten des Polyurethansystems, dadurch gekennzeichnet, daß
- ein vorvulkanisierter, kaltvulkanisierbarer Chloropren-Kautschuk, der gegebenenfalls einen mineralischen Füllstoff enthält, und
- als Bindemittel ein lösungsmittelfreier reaktiver Kleber, insbesondere auf der Basis eines Polyurethan-Elastomers, verwendet werden.

9. Verfahren zur Herstellung von Verbundkörpern auf der Basis eines Substrats (7) als Unterlage, einer darauf vorgesehenen festhaftenden Unterschicht (2) aus einem Chloropren-Kautschuk und einer Deckschicht (1) aus einem Polyurethan, die über eine Bindemittelschicht (3) festhaftend mit der Unterschicht (2) verbunden ist, gekennzeichnet durch Aufbringen eines Verbundmaterials nach einem der Ansprüche 1 bis 7 auf das Substrat (7), vorzugsweise durch Verkleben mit einem reaktiven Chloropren-Kleber.

10. Verfahren zur Herstellung von Verbundkörpern auf der Basis eines Substrats (7) als Unterlage, einer darauf vorgesehenen festhaftenden Unterschicht (2) aus einem Chloropren-Kautschuk und einer Deckschicht (1) aus einem Polyurethan, die über eine Bindemittelschicht (3) festhaftend mit der Unterschicht (2) verbunden ist, gekennzeichnet durch
- Aufbringen eines lösungsmittelfreien reaktiven Klebers, insbesondere auf der Basis eines Polyurethan-Elastomers, auf ein Flachmaterial aus einem vorvulkanisierten, kaltvulkanisierbaren Chloropren-Kautschuk, der gegebenenfalls einen mineralischen Füllstoff enthält, als Unterschicht (2),
- Aufbringen einer Schicht eines gießbaren Polyurethan-Elastomers, das gegebenenfalls einen Weichmacher enthält, insbesondere auf der Basis eines Polyesterpolyols, auf die mit dem Kleber als Bindemittel versehene Unterschicht (2),
- Aushärten des Polyurethan-Elastomers unter Erhalt einer Deckschicht (1) und
- Aufbringen des erhaltenen Verbundmaterials auf das Substrat (7), vorzugsweise durch Verkleben mit einem reaktiven Chloropren-Kleber.

11. Verfahren nach Anspruch 9 oder 10, dadurch gekennzeichnet, daß ein Substrat (7) aus Metall, insbesondere Stahl, Kunststoff, Holz, Zement oder Beton verwendet wird.

12. Verfahren nach einem oder mehreren der Ansprüche 9 bis 11, dadurch gekennzeichnet, daß das Substrat (7) ein Behälter ist, auf dessen Innenoberfläche das Verbundmaterial vorgesehen wird.

13. Verfahren nach einem oder mehreren der Ansprüche 8 bis 12, dadurch gekennzeichnet, daß eine oder mehrere der folgenden Maßnahmen in beliebigen Kombinationen angewandt werden:
- Verwendung eines gießbaren Polyurethan-Elastomers auf der Basis eines Polyesterpolyols für die Deckschicht (1);
- Verwendung eines gießbaren Polyurethan-Elastomers für die Deckschicht (1), das einen Weichmacher enthält;
- Herstellung bzw. Verwendung eines Flachmaterials aus dem Chloropren-Kautschuk als Unterschicht (2) in einer Dicke von etwa 0,7 bis 5,0 mm und vorzugsweise etwa 3 mm;
- Herstellung der Deckschicht (1) aus dem Polyurethan als Deckschicht (1) in einer Dicke von etwa 2 bis 30 mm und vorzugsweise etwa 15 mm;
- Aufbringen einer zusätzlichen ein- oder mehrlagigen Schicht (8) aus Chloropren-Kautschuk, die vorzugsweise aus einem vorvulkanisierten, kaltvulkanisierbaren Chloropren-Kautschuk besteht, auf die Deckschicht (1);
- Aufbringen einer zusätzlichen Schicht (8) aus drei Lagen (9, 10, 11), wovon die beiden äußeren Lagen (9, 11) aus einem vorvulkanisierten, kaltvulkanisierbaren Chloropren-Kautschuk und die mittlere Lage (10) aus einem vulkanisierten Chloropren-Kautschuk bestehen, durch Verkleben einer der äußeren Lagen (9) mit einem reaktiven Kleber auf der Basis eines Polyurethan-Elastomers mit der Deckschicht (1);
- Aufbringen eines Verbundmaterials nach einem der Ansprüche 1 bis 6 auf die zusätzliche Schicht (8);
- Aufbringen eines vorgefertigten Verbundmaterials nach den Ansprüche 1 bis 6, insbesondere in Form von Platten, auf einem Substrat (7) aus Metall, insbesondere Stahl, Kunststoff, Holz, Zement oder Beton, und insbesondere auf die Innenoberfläche von Behältern, insbesondere durch Verkleben, und vorzugsweise mit einem kaltvulkanisierenden Chloropren-Kautschuk-Kleber;
- Aufbringen des gießbaren Polyurethan-Elastomers der Deckschicht (1) durch Gießen oder Schleudern;
- Aufbringen des gießbaren Polyurethan-Elastomers der Deckschicht (1) bei einer Temperatur oberhalb seines Schmelzpunktes;
- Nachvernetzen des Polyurethans der Deckschicht (1) bei gegenüber Raumtemperatur erhöhter Temperatur, vorzugsweise bei etwa 130 °C;
- Aufbringen der Deckschicht (1) auf die Unterschicht (2) ohne vorheriges Aufrauhen der Unterschicht (2);
- Vorbehandlung des Substrats (7) vor dem Aufbringen des Verbundmaterials mit einem Primer;
- Verwendung eines kaltvernetzenden Polyurethan-Klebers als Bindemittel der Bindemittelschicht (3).

## Claims

1. Composite material in the form of a flat material, in particular in the form of sheets, for coating substrates (7), which are at risk in particular from wear and/or corrosion, which has an under-layer (2) of a chloroprene rubber, the under-side of which is intended for application to the substrate (7), and a top layer (1), of an elastomeric polyurethane, which is joined to the upper side of the under-layer (2) via a binder layer (3) and is produced by application of a pourable polyurethane system to the under-layer (2) coated with the binder (3),
characterized in that
- the under-layer (2) comprises a prevulcanized, cold-vulcanizable chloroprene rubber, which comprises a mineral filler, if appropriate, and
- the binder comprises a solvent-free reactive adhesive, in particular based on a polyurethane elastomer.

2. Composite material in the form of a flat material for coating substrates which are at risk in particular from wear and/or corrosion, which has an under-layer (2) of a chloroprene rubber, the under-side of which is intended for application to the substrate (7), and a top layer (1), of a polyurethane, which is joined to the upper side of the under-layer (2) via a binder layer (3) and is produced by application of a pourable polyurethane elastomer to the under-layer (2) coated with the binder (3) and curing, obtainable by
- application of a solvent-free reactive adhesive, in particular based on a polyurethane elastomer, as the binder, to a flat material of a prevulcanized, cold-vulcanizable chloroprene rubber, which comprises a mineral filler, if appropriate, as the under-layer (2),
- application of the pourable polyurethane elastomer, which comprises a plasticizer, if appropriate, in particular based on a polyester-polyol, to the under-layer (2) provided with the binder and
- curing of the polyurethane elastomer, to give the top layer (1).

3. Composite material according to claim 1 or 2, characterized in that the under-layer (2) has a thickness in the range from about 0.7 to 5.0 mm, and preferably of about 3 mm, and/or the top layer (1) has a thickness in the range from about 2 to 30 mm, and preferably of about 15 mm.

4. Composite material according to one or more of claims 1 to 3, characterized in that the under-layer (2) comprises three layers (4, 5, 6) one on top of the other, the lowest layer (4), which is intended for application to the substrate (7) and is joined adhesively with the substrate (7), and the top layer (6) comprising prevulcanized, cold-vulcanizable chloroprene rubber and the middle layer (5) comprising vulcanized chloroprene rubber.

5. Composite material according to one or more of claims 1 to 4, characterized in that there is provided, on the top layer (1), an additional single- or multilayered layer (8) of chloroprene rubber, which preferably comprises a prevulcanized, cold-vulcanizable chloroprene rubber and is glued to the top layer (1) with a reactive adhesive based on a polyurethane elastomer.

6. Composite material according to claim 5, characterized in that the additional layer (8) comprises three layers (9, 10, 11), the two outer layers (9, 11) comprising a prevulcanized, cold-vulcanizable chloroprene rubber and the middle layer (10) comprising a vulcanized chloroprene rubber, and one of the outer layers (9) being glued to the top layer (1) with a reactive adhesive based on a polyurethane elastomer.

7. Composite material according to claim 5 or 6, characterized in that a composite material according to one of claims 1 to 6 is provided on the additional layer (8).

8. Process for the production of the composite materials according to claims 1 to 7 by application of a layer of a binder to a flat material of a chloroprene rubber, as the under-layer (2), application of a layer of a pourable polyurethane elastomer to the flat material of the chloroprene rubber, which material is provided with the binder, and curing of the polyurethane system, characterized in that
- a prevulcanized, cold-vulcanizable chloroprene rubber, which comprises a mineral filler, if appropriate, and
- as the binder, a solvent-free reactive adhesive, in particular based on a polyurethane elastomer, are used.

9. Process for the production of composite bodies based on a substrate (7) as the base, an adhesive under-layer (2) of a chloroprene rubber provided on top, and a top layer (1) of a polyurethane which is joined adhesively to the under-layer (2) via a binder layer (3), characterized by application of a composite material according to one of claims 1 to 7 to the substrate (7), preferably by gluing with a reactive chloroprene adhesive.

10. Process for the production of composite bodies based on a substrate (7), as the base, an adhesive under-layer (2) of a chloroprene rubber provided on top, and a top layer (1) of a polyurethane which is joined adhesively to the under-layer (2) via a binder layer (3), characterized by
- application of a solvent-free reactive adhesive, in particular based on a polyurethane elastomer, to a flat material of a prevulcanized, cold-vulcanizable chloroprene rubber, which comprises a mineral filler, if appropriate, as the under-layer (2),
- application of a layer of a pourable polyurethane elastomer, which comprises a plasticizer, if appropriate, in particular based on a polyester-polyol, to the under-layer (2) provided with the adhesive as the binder,
- curing of the polyurethane elastomer, to give a top layer (1) and
- application of the resulting composite material to the substrate (7), preferably by gluing with a reactive chloroprene adhesive.

11. Process according to claim 9 or 10, characterized in that a substrate (7) of metal, in particular steel, plastic, wood, cement or concrete is used.

12. Process according to one or more of claims 9 to 11, characterized in that the substrate (7) is a container, on the inner surface of which the composite material is provided.

13. Process according to one or more of claims 8 to 12, characterized in that one or more of the following measures are used in any desired combinations:
- use of a pourable polyurethane elastomer based on a polyester-polyol for the top layer (1);
- use of a pourable polyurethane elastomer, which comprises a plasticizer, for the top layer (1);
- preparation or use of a flat material of the chloroprene rubber, as the under-layer (2), in a thickness of about 0.7 to 5.0 mm, and preferably about 3 mm;
- production of the top layer (1) from the polyurethane as the top layer (1) in a thickness of about 2 to 30 mm, and preferably about 15 mm;
- application to the top layer (1) of an additional single- or multilayered layer (8) of chloroprene rubber, which preferably comprises a prevulcanized, cold-vulcanizable chloroprene rubber;
- application of an additional layer (8) of three layers (9, 10, 11), the two outer layers (9, 11) of which comprise a prevulcanized, cold-vulcanizable chloroprene rubber and the middle layer (10) of which comprises a vulcanized chloroprene rubber, by gluing one of the outer layers (9) to the top layer (1) with a reactive adhesive based on a polyurethane elastomer;
- application of a composite material according to one of claims 1 to 6 to the additional layer (8);
- application of a prefabricated composite material according to claims 1 to 6, in particular in the form of sheets, to a substrate (7) of metal, in particular steel, plastic, wood, cement or concrete, and in particular to the internal surface of containers, in particular by gluing, and preferably with a cold-vulcanizing chloroprene rubber adhesive;
- application of the pourable polyurethane elastomer of the top layer (1) by pouring or whirler coating;
- application of the pourable polyurethane elastomer of the top layer (1) at a temperature above its melting point;
- after-crosslinking of the polyurethane of the top layer (1) at a temperature elevated with respect to room temperature, preferably at about 130°C;
- application of the top layer (1) to the under-layer (2) without prior roughening of the under-layer (2);
- pretreatment of the substrate (7) with a primer before application of the composite material;
- use of a cold-crosslinking polyurethane adhesive as the binder of the binder layer (3).

## Revendications

1. Matériau multicouche sous la forme d'un matériau plat, notamment sous la forme de panneaux, plus particulièrement pour le revêtement de substrats (7) menacés par l'usure et/ou la corrosion, ce matériau comprenant une couche inférieure (2) en un caoutchouc chloroprène, dont la face inférieure est destinée à être appliquée sur le substrat (7), et une couche supérieure (1) consistant en un polyuréthanne élastomère et reliée, par l'intermédiaire d'une couche de liant (3), à la face supérieure de la couche inférieure (2), cette couche supérieure étant fabriquée par application d'un système polyuréthanique coulable sur la couche inférieure (2) revêtue du liant (3),
caractérisé en ce que
- la couche inférieure (2) consiste en un caoutchouc chloroprène vulcanisable à froid, prévulcanisé et qui contient, le cas échéant, une matière minérale de remplissage, et
- le liant consiste en une colle réactive exempte de solvant et, notamment, à base d'un élastomère de polyuréthanne.

2. Matériau multicouche sous la forme d'un matériau plat, pour le revêtement notamment de substrats menacés par l'usure et/ou la corrosion, ce matériau comprenant une couche inférieure (2) en un caoutchouc chloroprène, dont la face inférieure est destinée à être appliquée sur le substrat (7), et une couche supérieure (1) consistant en un polyuréthanne et reliée, par l'intermédiaire d'une couche de liant (3), à la face supérieure de la couche inférieure (2), cette couche supérieure étant fabriquée par application d'un élastomère de polyuréthanne coulable sur la couche inférieure (2) revêtue du liant (3) et par durcissement, le matériau étant obtenu par
- application d'une colle réactive exempte de solvant et, notamment, à base d'un élastomère de polyuréthanne, en tant que liant, sur un matériau plat en un caoutchouc chloroprène vulcanisable à froid, prévulcanisé et contenant, le cas échéant, une matière minérale de remplissage, en tant que couche inférieure (2),
- application de l'élastomère de polyuréthanne coulable, qui contient, le cas échéant, un plastifiant, notamment à base d'un polyalcool de polyester, sur la couche inférieure (2) pourvue du liant, et
- durcissement de l'élastomère de polyuréthanne pour l'obtention de la couche supérieure (1).

3. Matériau multicouche selon la revendication 1 ou 2, caractérisé en ce que la couche inférieure (2) présente une épaisseur comprise dans la fourchette d'environ 0,7 à 5,0 mm et, de préférence, d'environ 3 mm, et/ou en ce que la couche supérieure (1) a une épaisseur comprise dans la fourchette d'environ 2 à 30 mm et, de préférence, d'environ 15 mm.

4. Matériau multicouche selon une ou plusieurs des revendications 1 à 3, caractérisé en ce que la couche inférieure (2) consiste en trois couches superposées (4, 5, 6), la couche du dessous (4) destinée à être appliquée sur le substrat (7) ou à adhérer au substrat (7) ainsi que la couche du dessus (6) consistant en du caoutchouc chloroprène vulcanisable à froid et prévulcanisé, et la couche médiane (5) consistant en du caoutchouc chloroprène vulcanisé.

5. Matériau multicouche selon une ou plusieurs des revendications 1 à 4, caractérisé en ce qu'il est prévu, sur la couche supérieure (1), une couche supplémentaire monocouche ou multicouche (8) en caoutchouc chloroprène, qui consiste, de préférence, en un caoutchouc chloroprène vulcanisable à froid et prévulcanisé et qui est fixée sur la couche supérieure (1) par une colle réactive à base d'un élastomère de polyuréthanne.

6. Matériau multicouche selon la revendication 5, caractérisé en ce que la couche supplémentaire (8) consiste en trois couches (9, 10, 11), les deux couches extérieures (9, 11) consistant en un caoutchouc chloroprène vulcanisable à froid et prévulcanisé, et la couche médiane (10) consistant en un caoutchouc chloroprène vulcanisé, l'une (9) des couches extérieures étant fixée sur la couche supérieure (1) par une colle réactive à base d'un élastomère de polyuréthanne.

7. Matériau multicouche selon la revendication 5 ou 6, caractérisé en ce qu'il est prévu, sur la couche supplémentaire (8), un matériau multicouche selon l'une des revendications 1 à 6.

8. Procédé de fabrication des matériaux multicouches selon les revendications 1 à 7, par application d'une couche d'un liant sur un matériau plat en un caoutchouc chloroprène, en tant que couche inférieure (2), application d'une couche d'un élastomère de polyuréthanne coulable sur le matériau plat, en caoutchouc chloroprène, pourvu du liant, et durcissement du système polyuréthanique, caractérisé en ce que l'on utilise
- un caoutchouc chloroprène vulcanisable à froid, prévulcanisé et contenant, le cas échéant, une matière minérale de remplissage, et
- en tant que liant, une colle réactive exempte de solvant et, notamment, à base d'un élastomère de polyuréthanne.

9. Procédé de fabrication de corps multicouches sur un substrat (7) en tant que support, une couche inférieure adhérente (2) étant prévue sur celui-ci et faite en un caoutchouc chloroprène, et une couche supérieure (1) consistant en un polyuréthanne et étant reliée à la couche inférieure (2) par l'intermédiaire d'une couche de liant (3), caractérisé par l'application d'un matériau multicouche selon l'une des revendications 1 à 7 sur le substrat (7), de préférence par collage au moyen d'une colle réactive de chloroprène.

10. Procédé de fabrication de corps multicouches sur un substrat (7) en tant que support, une couche inférieure adhérente (2) étant prévue sur celui-ci et faite en un caoutchouc chloroprène, et une couche supérieure (1) consistant en un polyuréthanne et étant reliée à la couche inférieure (2) par l'intermédiaire d'une couche de liant (3), caractérisé par
- l'application d'une colle réactive exempte de solvant et, notamment, à base d'un élastomère de polyuréthanne, sur un matériau plat en un caoutchouc chloroprène vulcanisable à froid, prévulcanisé et contenant, le cas échéant, une matière minérale de remplissage, en tant que couche inférieure (2),
- l'application d'une couche d'un élastomère de polyuréthanne coulable, qui contient, le cas échéant, un plastifiant, notamment à base d'un polyalcool de polyester, sur la couche inférieure (2) pourvue de la colle, en tant que liant,
- le durcissement de l'élastomère de polyuréthanne pour l'obtention d'une couche supérieure (1), et
- l'application du matériau multicouche ainsi obtenu sur le substrat (7), de préférence par collage au moyen d'une colle réactive de chloroprène.

11. Procédé selon la revendication 9 ou 10, caractérisé en ce que l'on utilise un substrat (7) en métal, notamment en acier, ou bien en matière plastique, en bois, en ciment ou en béton.

12. Procédé selon une ou plusieurs des revendications 9 à 11, caractérisé en ce que le substrat (7) est un récipient, sur la face interne duquel est prévu le matériau multicouche.

13. Procédé selon une ou plusieurs des revendications 8 à 12, caractérisé en ce que l'on fait appel à une ou plusieurs des mesures suivantes selon n'importe quelle combinaison :
- utilisation d'un élastomère de polyuréthanne coulable, à base d'un polyalcool de polyester, pour la couche supérieure (1) ;
- utilisation, pour la couche supérieure (1), d'un élastomère de polyuréthanne coulable, contenant un plastifiant ;
- fabrication ou utilisation d'un matériau plat en caoutchouc chloroprène, en tant que couche inférieure (2), en une épaisseur d'environ 0,7 à 5,0 mm et, de préférence, d'environ 3 mm ;
- fabrication de la couche supérieure (1) en polyuréthanne, en tant que couche supérieure (1), en une épaisseur d'environ 2 à 30 mm et, de préférence d'environ 15 mm ;
- application, sur la couche supérieure (1), d'une couche supplémentaire monocouche ou multicouche (8) en caoutchouc chloroprène, qui consiste, de préférence, en un caoutchouc chloroprène vulcanisable à froid et prévulcanisé ;
- application d'une couche supplémentaire (8) composée de trois couches (9, 10, 11), les deux couches extérieures (9, 11) consistant en un caoutchouc chloroprène vulcanisable à froid et prévulcanisé, et la couche médiane (10) consistant en un caoutchouc chloroprène vulcanisé, par collage de l'une (9) des couches extérieures sur la couche supérieure (1), au moyen d'une colle réactive à base d'un élastomère de polyuréthanne ;
- application d'un matériau multicouche selon l'une des revendications 1 à 6 sur la couche supplémentaire (8) ;
- application d'un matériau multicouche préfabriqué selon les revendications 1 à 6, notamment sous la forme de panneaux, sur un substrat (7) en métal, notamment en acier, ou bien en matière plastique, en bois, en ciment ou en béton et, notamment, sur la face interne de récipients, en particulier par collage et, de préférence, au moyen d'une colle au caoutchouc chloroprène à vulcanisation à froid ;
- application de l'élastomère de polyuréthanne coulable de la couche supérieure (1) par coulée ou par centrifugation ;
- application de l'élastomère de polyuréthanne coulable de la couche supérieure (1) à une température supérieure à son point de fusion ;
- post-réticulation du polyuréthanne de la couche supérieure (1) à une température augmentée par rapport à la température ambiante et, de préférence, d'environ 130 °C ;
- application de la couche supérieure (1) sur la couche inférieure (2) sans que la couche inférieure (2) ne soit, au préalable, rendue rugueuse ;
- traitement préalable du substrat (7) par un apprêt avant l'application du matériau multicouche ;
- utilisation d'une colle de polyuréthanne à réticulation à froid, en tant que liant pour la couche de liant (3).
